(19) **Europäisches Patentamt**

**European Patent Office**

**Office européen des brevets**

(11) **EP 1 231 482 A2**

(12) **EUROPÄISCHE PATENTANMELDUNG**

(43) Veröffentlichungstag:
**14.08.2002 Patentblatt 2002/33**

(51) Int Cl.⁷: **G01S 17/32**, G01S 7/491

(21) Anmeldenummer: **02000507.0**

(22) Anmeldetag: **09.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **12.02.2001 DE 10106770**

(71) Anmelder: **Omron Electronics Manufacturing of Germany GmbH**
**71154 Nufringen (DE)**

(72) Erfinder: **Adamietz, Hubert**
**73760 Ostfildern (DE)**

(74) Vertreter: **Patentanwälte ,**
**Ruff, Wilhelm, Beier, Dauster & Partner**
**Postfach 10 40 36**
**70035 Stuttgart (DE)**

(54) **Messgerät und Verfahren zum Auswerten der Lichtlaufzeit**

(57)     2.1. Die Erfindung betrifft ein Messgerät mit einem Signalgenerator zum Erzeugen eines Steuersignals, mit einem Lichtsender zum Erzeugen eines in definierter Phasenbeziehung zu dem Steuersignal stehenden Lichtsignals, mit einem Lichtempfänger und mit einer Auswerteeinheit, die eine Lichtlaufzeit zwischen Lichtsender und Lichtempfänger berücksichtigt.

2.2. Erfindungsgemäß weist die Auswerteeinheit einen durch das Steuersignal steuerbaren Synchrongleichrichter zum Verarbeiten eines Ausgangssignals des Lichtempfängers und zum Ausgeben eines von der Lichtlaufzeit abhängigen Bewertungssignals auf.

2.3. Verwendung beispielsweise bei Reflexionslichtschranken.

Fig. 1

EP 1 231 482 A2

**Beschreibung**

Die Erfindung betrifft ein Messgerät mit einem Signalgenerator zum Erzeugen eines Steuersignals, mit einem Lichtsender zum Erzeugen eines in definierter Phasenbeziehung zu dem Steuersignal stehenden Lichtsignals, mit einem Lichtempfänger und mit einer Auswerteeinheit, die eine Lichtlaufzeit zwischen Lichtsender und Lichtempfänger berücksichtigt.

Die Erfindung betrifft auch ein Verfahren zum Auswerten der Lichtlaufzeit eines von einem Lichtsender ausgesendeten und von einem Lichtempfänger empfangenen Lichtsignals, das eine definierte Phasenbeziehung zu einem Steuersignal hat.

In der deutschen Offenlegungsschrift DE 197 01 803 A1 ist ein Lichttaster mit Lichtlaufzeit-Auswertung beschrieben. Ein Abstand von einem Objekt wird durch Bestimmen einer Kreuzkorrelationsfunktion zwischen einem reflektierten Signal und einem verzögerten Referenzsignal ermittelt. Sendesignal und Referenzsignal haben eine unterschiedliche Signalform. Die Signalformen sind dabei so gewählt, dass sich ein nichtlinearer Verlauf der Korrelationsfunktion und innerhalb eines interessierenden Tastbereichs zwischen einer oberen und unteren Schwelle ein relativ steiler und eindeutiger Verlauf der Korrelationsfunktion ergibt. Die Erzeugung zweier unterschiedlicher Signalformen mit hoher Genauigkeit erfordert einen leistungsfähigen Signalgenerator und die Berechnung der Kreuzkorrelationsfunktion eine leistungsfähige Signalverarbeitung.

Mit der Erfindung soll ein mit Lichtsender und Lichtempfänger arbeitendes Messgerät und ein Verfahren zum Auswerten der Lichtlaufzeit angegeben werden, die mit geringem Aufwand realisiert werden können.

Erfindungsgemäß ist bei einem Messgerät der eingangs genannten Art vorgesehen, dass die Auswerteeinheit einen durch das Steuersignal steuerbaren Synchrongleichrichter zum Verarbeiten eines Ausgangssignals des Lichtempfängers und zum Ausgeben eines von der Lichtlaufzeit abhängigen Bewertungssignals aufweist.

Durch diese Maßnahmen ergibt sich ein relativ einfacher Aufbau bei dem nur geringe Anforderungen an einen Signalgenerator gestellt werden, da das gesendete Lichtsignal und das Steuersignal keine unterschiedlichen Signalformen aufweisen müssen und eine einfache Form, wie z.B. Rechteckform oder Sinusform haben dürfen. Die Signalverarbeitung kann mittels eines einfachen Synchrongleichrichters durchgeführt werden. Das Ausgangssignal des Synchrongleichrichters ist von einer Phasenverschiebung zwischen dem empfangenen Lichtsignal und dem Steuersignal abhängig und nach einer Mittelwertbildung des Ausgangssignals des Synchrongleichrichters erhält man ein Signal, dessen Höhe neben der Höhe des Ausgangssignals des Lichtempfängers von der Phasenverschiebung abhängt. Ein Bewertungsfaktor des Synchrongleichrichters, der ein Maß für die Lichtlaufzeit angibt, ist maximal, wenn keine Phasenverschiebung zwischen Steuersignal und empfangenem Lichtsignal auftritt. Ein von dem Synchrongleichrichter ausgegebenes Bewertungssignal, das von dem Bewertungsfaktor mit bestimmt ist, kann dadurch entweder für eine Abstandsbestimmung oder als Zusatzinformation zum Vermeiden von Fehlmessungen verwendet werden. Beispielsweise können Reflexionslichttaster, auch mit Hintergrundausblendung, oder Reflexionslichtschranken realisiert werden. Das Steuersignal kann als Rechtecktaktsignal oder als Sinuswellensignal ausgebildet sein, das die gleiche Frequenz wie das gesendete Lichtsignal aufweist.

In Weiterbildung der Erfindung ist das Steuersignal zum Steuern des Synchrongleichrichters gegenüber dem gesendeten Lichtsignal um einen vorbestimmten Zeitraum verzögert. Auf diese Weise ist der Messbereich des Messgeräts einstellbar, da sich ein maximaler Bewertungsfaktor des Synchrongleichrichters bei einer Phasenverschiebung von null ergibt. Die Verzögerung des Steuersignals wird vorteilhafterweise auf dem vorgesehenen Messbereich abgestimmt. Beispielsweise wird die Verzögerung bei einer Reflexionslichtschranke im Bereich der Laufzeit des Lichts vom Lichtsender zum Reflektor und wieder zurück zum Empfänger gewählt.

In Weiterbildung der Erfindung ist vorgesehen, dass die Verzögerung des Steuersignals gegenüber dem ausgesendeten Lichtsignal auf die Lichtlaufzeit zwischen Lichtsender und Lichtempfänger abgestimmt ist. Durch diese Maßnahme kann erreicht werden, dass ein maximaler Bewertungsfaktor, d.h. eine Phasenverschiebung von null, dann erreicht wird, wenn die Messstrecke voll durchlaufen wird. Andererseits wird die Verzögerung des Steuersignals vorteilhafterweise so abgestimmt, dass bei sehr nahen Objekten die durch die Berücksichtigung der Lichtlaufzeit verursachte Verstärkung nicht null wird. Vorteilhafterweise wird daher eine etwas kleinere Verzögerung des Steuersignals gegenüber dem ausgesendeten Lichtsignal gewählt, als die Lichtlaufzeit zwischen Lichtsender und Lichtempfänger beträgt.

In Weiterbildung der Erfindung ist vorgesehen, dass der Synchrongleichrichter zum Gewichten des Ausgangssignals des Lichtempfängers anhand der Lichtlaufzeit zwischen Lichtsender und Lichtempfänger vorgesehen ist. Durch Gewichtung des Ausgangssignals des Lichtempfängers kann die Fehlerempfindlichkeit des Messgeräts deutlich verringert werden. Da in dem Synchrongleichrichter die Lichtlaufzeit berücksichtigt wird und der Bewertungsfaktor maximal ist, wenn keine Phasenverschiebung zwischen Steuersignal und dem Ausgangssignal des Lichtempfängers vorliegt, kann das Ausgangssignal des Lichtempfängers im interessierenden Messbereich angehoben werden, wohingegen es außerhalb des interessierenden Messbereichs abgesenkt wird, wodurch Fehlmessungen vermieden werden. Eine solche Gewichtung erfolgt automatisch dadurch, dass das Ausgangssignal des Lichtempfängers das Eingangssignal des Synchrongleichrichters ist. Das Ausgangssignal des Synchrongleichrichters ist somit bereits das gewichtete Signal.

In Weiterbildung der Erfindung ist im Strahlengang zwischen Lichtsender und Lichtempfänger ein die Polarisationsrichtung des Lichtsignals beeinflussender Reflektor und vor dem Lichtsender sowie dem Lichtempfänger jeweils ein Polarisationsfilter angeordnet, wobei Polarisationsebenen der Polarisationsfilter senkrecht zueinander ausgerichtet sind. Durch diese Maßnahmen ist eine Reflexionslichtschranke mit Polfiltern ausgebildet, die auslöst, wenn sich ein Objekt in den Strahlengang zwischen Lichtsender und Lichtempfänger schiebt und dadurch kein Lichtsignal mehr am Lichtempfänger ankommt. Die Polarisationsfilter tragen zur Vermeidung von Messfehlern bei, erst im Zusammenhang mit der erfindungsgemäßen Berücksichtigung der Lichtlaufzeit aber kann die sogenannte Spiegelunterdrückung verbessert werden. Bei ungünstiger Konfiguration einer Reflexionslichtschranke ist eine solche Spiegelunterdrückung nur sehr schwach, da aufgrund der Anordnung von Linsen, der Filterqualität der Polarisationsfilter, der Drehung der Polarisation am Reflektor, der Divergenz des Sendestrahls und der Streuwirkung des Reflektors das Empfängersignal in Abhängigkeit des Abstands zwischen Lichtsender bzw. Empfänger und Reflektor einen Verlauf aufweist, der nach einem lokalen Maximum bei weiterer Erhöhung des Abstands stark abfällt. Für kleine Abstände oder Reichweiten ist das Empfängersignal daher sehr groß, wohingegen es sich mit zunehmender Reichweite stark verkleinert. Durch die erfindungsgemäße Berücksichtigung der Lichtlaufzeit kann dieser ungünstige Verlauf des Empfängersignals ausgeglichen und die Spiegelunterdrückung verbessert werden.

In Weiterbildung der Erfindung ist vorgesehen, dass die Auswerteeinheit Mittel zum getrennten Verarbeiten und Bewerten des durch den Synchrongleichrichter bestimmten Bewertungsfaktors und des Ausgangssignals des Lichtempfängers aufweist. Indem der vom Synchrongleichrichter bestimmte Bewertungsfaktor und das Ausgangssignal des Lichtempfängers in der Auswerteeinheit getrennt verarbeitet und/oder bewertet werden, sind die Voraussetzungen geschaffen, eine multifunktionelles Messgerät zu realisieren. Durch unterschiedliche Verarbeitung und Bewertung der Ausgangssignale des Synchrongleichrichters und des Lichtempfängers können nämlich verschiedene Sensortypen mit dem Messgerät realisiert werden.

In Weiterbildung der Erfindung ist vorgesehen, dass mehrere auswählbare Mittel zum getrennten Verarbeiten und Bewerten vorgesehen sind, die jeweils eine unterschiedliche Signalverarbeitung und Signalbewertung ausführen können. Indem mehrere auswählbare Mittel zum getrennten Verarbeiten und Bewerten vorgesehen sind, zwischen denen beispielsweise umgeschaltet werden kann, kann die Funktion des Messgeräts verändert werden. Beispielsweise kann man ohne Hardwareänderung, durch Umschalten zwischen verschiedenen Arten der Auswertung und Verknüpfung der Ergebnisse der Auswertung, einen Lichttaster mit oder ohne Hintergrundausblendung, einen Lichttaster mit einstellbarem Schaltfenster, ein sogenannter Window-Sensor, oder ein Messgerät als eine polarisierte oder nichtpolarisierte Reflex-Lichtschranke erhalten. Dadurch ist ein multifunktionales Messgerät realisiert, das unterschiedlichste Anforderungen erfüllen kann.

In Weiterbildung der Erfindung ist vorgesehen, dass die Mittel zum getrennten Verarbeiten und Bewerten in einem Speicher der Auswerteeinheit gespeicherte Programme aufweisen. Auf diese Weise ist eine Veränderung der Art der Auswertung durch Umschaltung zwischen mehreren gespeicherten Programmen oder durch Neueinspielen von Programmen möglich. Die Programme sind vorzugsweise als sogenannte Firmware, nämlich im Kontrollspeicher eines Mikrocomputers abgelegte Mikroprogramme, ausgeführt.

In Weiterbildung der Erfindung ist vorgesehen, dass wenigstens der Signalgenerator, der Lichtsender, der Lichtempfänger und die Auswerteeinheit in einem gemeinsamen Gehäuse untergebracht sind.

Das der Erfindung zugrundeliegende Problem wird auch durch ein Verfahren zum Auswerten der Lichtlaufzeit eines von einem Lichtsender ausgesendeten und von einem Lichtempfänger empfangenen Lichtsignals, das eine definierte Phasenbeziehung zu einem Steuersignal hat, gelöst, bei dem der Schritt des Erzeugens eines von der Lichtlaufzeit abhängigen Bewertungssignals durch Verknüpfen eines Ausgangssignals des Lichtempfängers mit dem Steuersignal vorgesehen ist. Beispielsweise kann das Ausgangssignal des Lichtempfängers mit einem Steuersignal in Form eines Rechtecktakts mit den Werten +1/-1 multipliziert werden, der die gleiche Frequenz wie das gesendete Lichtsignal aufweist. Eine solche Multiplikation ergibt die Wirkung eines Synchrongleichrichters, indem das Ausgangssignal des Lichtempfängers abschnittsweise invertiert wird und dann entsprechend dem Taktsignal Abschnitte des invertierten Ausgangssignals mit Abschnitten des Ausgangssignals zusammengesetzt werden. Ein solches Bewertungssignal hat einen Gleichanteil, der von der Phasenverschiebung zwischen dem Taktsignal und dem empfangenen Lichtsignal sowie von der Signalhöhe des Ausgangssignals des Lichtempfängers abhängt. Bei einer Phasenverschiebung von null zwischen dem Rechtecktakt und einem Rechteck-Ausgangssignal des Lichtempfängers ergibt sich ein Gleichspannungssignal. Das Bewertungssignal kann weiter verarbeitet werden, beispielsweise durch Mittelwertbildung und Verstärkung. Das Steuersignal kann beispielsweise auch die Form einer Sinuswelle aufweisen.

In Weiterbildung des erfindungsgemäßen Verfahrens ist ein Schritt des Gewichtens des Ausgangssignals des Lichtempfängers mit dem Bewertungssignal vorgesehen. Auf diese Weise kann ein ungünstiger Verlauf des Ausgangssignals des Lichtempfängers in Abhängigkeit des Objekt- bzw. Reflektorabstands kompensiert werden, um Fehlmessungen zu vermeiden. Dieser Schritt des Gewichtens wird automatisch vorgenommen, wenn das Eingangssignal des Synchrongleichrichters das Ausgangssignal des Lichtempfängers ist.

Weitere Merkmale und Vorteile der Erfindung ergeben sich aus den Ansprüchen und der folgenden Beschreibung im Zusammenhang mit den Zeichnungen. In den Zeichnungen zeigen:

Fig. 1 eine schematische Darstellung einer erfindungsgemäßen Reflexionslichtschranke,

Fig. 2 eine Prinzipsskizze eines Synchrongleichrichters der erfindungsgemäßen Reflexionslichtschranke,

Fig. 3 den prinzipiellen Verlauf des Bewertungsfaktors des Synchrongleichrichters der Fig. 2 in Abhängigkeit der Zeitverschiebung t und

Fig. 4 den Verlauf des Ausgangssignals des Lichtempfängers der Reflexionslichtschranke der Fig. 1.

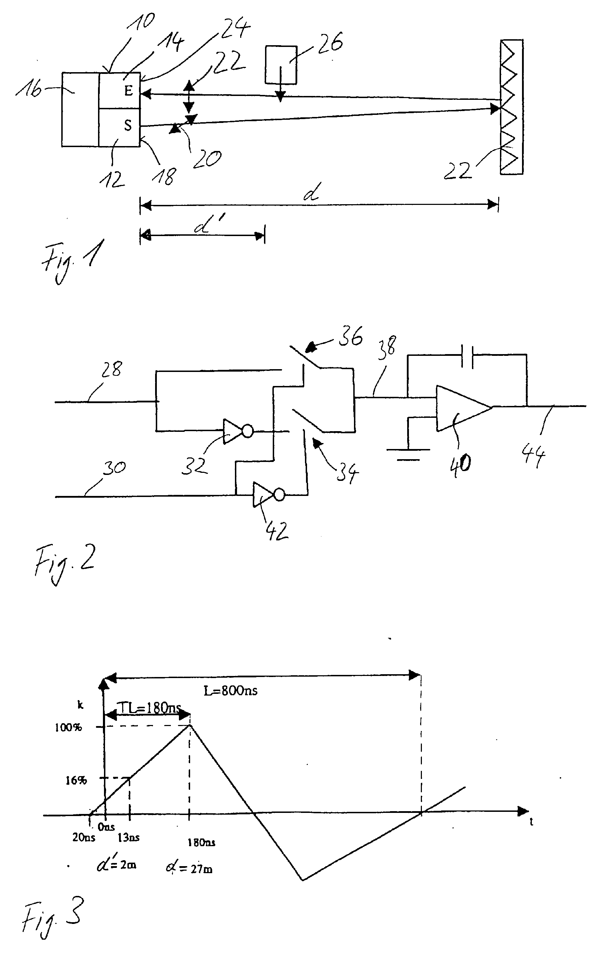

In der Darstellung der Fig. 1 ist schematisch eine erfindungsgemäße Reflexionslichtschranke dargestellt. In einem Gehäuse 10 sind ein Lichtsender 12, ein Lichtempfänger 14 sowie eine Auswerteeinheit 16 angeordnet. Der Lichtsender 12 ist als Rotlicht-Sender ausgebildet, als Lichtempfänger 14 wird eine Fotodiode verwendet. Der Lichtsender 12 ist mit einem Polarisationsfilter 18 versehen und sendet ein linear polarisiertes Lichtsignal aus, dessen Polarisationsrichtung durch den Doppelpfeil 20 angedeutet ist. Das vom Lichtsender 12 ausgehende Lichtsignal trifft im Abstand d auf einen Tripeloder Retroreflektor 22, der das Lichtsignal reflektiert und dessen Polarisationsrichtung modifiziert und im Idealfall um 90° dreht. Infolgedessen hat das vom Retroreflektor 22 reflektierte Lichtsignal eine gegenüber der Polarisationsrichtung 20 um 90° gedrehte Polarisationsrichtung, die durch einen Doppelpfeil 22 angedeutet ist. Ein Polarisationsfilter 24 am Empfänger 14 ist entsprechend der Polarisationsrichtung 22 ausgerichtet. Der Empfänger 14 empfängt das vom Retroreflektor 22 reflektierte Lichtsignal und gibt ein Ausgangssignal an die Auswerteeinheit 16 aus.

Wird der Weg des Lichtsignals vom Lichtsender 12 über den Retroreflektor 22 zum Lichtempfänger 14 durch ein Objekt 26 unterbrochen, das sich in den Strahlengang bewegt, wird das vom Lichtsender 12 ausgehende Lichtsignal zwar möglicherweise von einer spiegelnden Seitenfläche des Objekts 26 auf den Empfänger 14 reflektiert, bei dieser Reflexion wird die Polarisationsrichtung 20 jedoch nicht um 90° gedreht, so dass das vom Objekt 26 reflektierte Lichtsignal den Polarisationsfilter 24 des Lichtempfängers 14 nicht passieren kann. Der Lichtempfänger 14 wird in diesem Fall daher normalerweise kein Ausgangssignal an die Auswerteeinheit 16 übergeben.

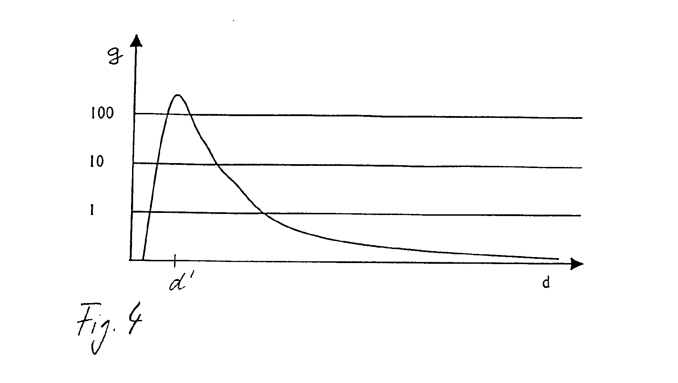

Die Signalhöhe des Ausgangssignals des Lichtempfängers 14 variiert jedoch aufgrund der Anordnung der Linsen, der Divergenz des gesendeten Lichtstrahls und der streuenden Wirkung des Retroreflektors 22 in Abhängigkeit von dem Abstand d des Lichtsenders 12 bzw. des Lichtempfängers 14 vom Retroreflektor 22. Der Verlauf der normierten Signalhöhe des Ausgangssignals des Lichtempfängers 14, der als Gain bezeichnet wird, in Abhängigkeit des Reflektorabstands d ist in der Fig. 4 aufgetragen. Dem in der Fig. 4 dargestellten Verlauf ist zu entnehmen, dass das Ausgangssignal des Lichtempfängers 14 bei kleinen Reflektorabständen d sehr groß ist, ein Maximum durchläuft und mit zunehmendem Reflektorabstand d rasch abfällt. Bewegt sich nun das Objekt 26 im Abstand d' vom Lichtsender 12 bzw. Lichtempfänger 14 in den Lichtstrahl und liegt dieser Abstand d' im Bereich des Maximums des in der Fig. 4 dargestellten Verlaufs der Signalhöhe des Ausgangssignals des Lichtempfängers 14, kann es zu Fehlmessungen kommen, wenn die Polarisationsfilter 18 bzw. 24 einen kleinen Anteil des am Objekt 26 reflektierten Lichtstrahls zum Lichtempfänger 14 durchlassen. Das am Objekt reflektierte Licht kann nämlich trotz Polarisationsfilter zu einem gewissen Teil bis zum Empfänger kommen, da eine hundertprozentige Filterung des einfallenden Lichts nicht möglich ist. Dies ist besonders dann kritisch, wenn ein großer Reflektorsabstand d zwischen Lichtsender 12 bzw. Lichtempfänger 14 und Retroreflektor 22 gewählt wurde, da dann der Lichtempfänger 14 ohnehin ein niedriges Ausgangssignal liefert und eine Detektionsschwelle daher niedrig angesetzt sein muss. Solche Fehlmessungen werden als Spiegelfehler, ihre Unterdrückung als Spiegelunterdrückung bezeichnet.

Gemäß dem Stand der Technik stehen ein gute Spiegelunterdrückung und ein großer Reflektorabstand d im Gegensatz zueinander. Ein sehr hoher Reflektorabstand d erfordert bei gegebener optomechanischer Anordnung eine hohe Sendeleistung und eine hohe Empfängersensitivität. Als Konsequenz steigt die Empfindlichkeit gegen Spiegelfehler, und die Spiegelunterdrückung verschlechtert sich. Andererseits führt eine Verbesserung der Spiegelunterdrückung durch Verkleinerung der Empfängersensitivität, beispielsweise eine Verkleinerung der Verstärkung, zu einer Verringerung des möglichen Reflektorabstands d.

Bei der erfindungsgemäßen Reflexionslichtschranke berücksichtigt die Auswerteeinheit 16 eine Laufzeit des Lichtsignals zwischen Lichtsender 12, Retroreflektor 22 oder Objekt 26 und Lichtempfänger 14. Hierzu weist die Auswerteeinheit 16 einen Synchrongleichrichter zum Verarbeiten des Ausgangssignals des Lichtempfängers auf.

Fig. 2 zeigt den prinzipiellen Aufbau des in der Auswerteeinheit 16 der Fig. 1 verwendeten Synchrongleichrichters. Das Ausgangssignal des Lichtempfängers 14 liegt auf einer Leitung 28 und ein Steuersignal, beispielsweise ein Rechtecktakt, liegt auf einer Leitung 30 an. Die Leitung 28 wird in zwei parallele Zweige aufgeteilt, und das Ausgangssignal wird in einem der beiden Zweige durch einen Inverter 32 invertiert. Im in der Fig. 2 unteren Zweig gelangt das invertierte Ausgangssignal dann zu einem ersten Schalter 34. Im in der Fig. 2 oberen Zweig liegt das unveränderte Ausgangssignal an einem Schalter 36 an.

Mit Hilfe der Schalter 34 und 36 wird das Ausgangssignal bzw. das invertierte Ausgangssignal abwechselnd auf eine Leitung 38 gelegt, die zu einem Operationsverstärker 40 führt. Hierzu wird der Schalter 36 von dem Taktsignal auf der Leitung 30 angesteuert, wohingegen der Schalter 34 durch das mittels eines Inverters 42 invertierte Taktsignal angesteuert wird. Im Falle eines Rechtecktaktsignals öffnen und schließen sich die Schalter 34 und 36 daher abwechselnd im Takt des Taktsignals auf der Leitung 30. Während Fig. 2 einen Zustand zeigt, in dem beide Schalter 34 und 36 geöffnet sind, wäre bei Steuerung durch das rechteckförmige Taktsignal der Schalter 34 immer dann geöffnet wenn der Schalter 36 geschlossen ist, und umgekehrt.

Ist das Ausgangssignal auf der Leitung 28 beispielsweise ein rechteckförmiges, periodisches Signal mit der gleichen Frequenz wie das auf der Leitung 30 anliegende rechteckförmige Taktsignal und liegt keine Phasenverschiebung zwischen dem Ausgangssignal und dem Taktsignal vor, wird auf der Leitung 38 ein Gleichspannungssignal anliegen. Bei Auftreten einer Phasenverschiebung zwischen dem Ausgangssignal und dem Taktsignal verringert sich der Gleichanteil des Signals auf der Leitung 38, so dass nach einer Verstärkung und Mittelwertbildung durch den Operationsverstärker 40 am Ausgang 44 ein Bewertungssignal anliegt, dessen Signalhöhe von der Phasenverschiebung zwischen dem Ausgangssignal und dem Taktsignal, aus der sich ein Bewertungsfaktor k des Synchrongleichrichters ergibt, sowie von der Signalhöhe des Ausgangssignals des Lichtempfängers 14 auf der Leitung 28 abhängt. Damit ist mit Hilfe des Bewertungssignals auf der Leitung 44 aber auch eine Aussage über die Laufzeit des vom Lichtsender 12 ausgesendeten Lichtsignals zum Lichtempfänger 14 möglich.

Fig. 3 zeigt den Verlauf des Bewertungsfaktors k des Synchrongleichrichters in Abhängigkeit der Zeitverschiebung t zwischen dem Ausgangssignal und dem Taktsignal entsprechend der Laufzeit des Lichtsignals vom Lichtsender 12 zum Lichtempfänger 14. Zu berücksichtigen ist dabei, dass der dargestellte Verlauf des Bewertungsfaktors k nur dann dem Verlauf des Bewertungssignals am Ausgang des Synchrongleichrichters entspricht, wenn das Ausgangssignal des Lichtempfängers 14 unabhängig von der Laufzeit des Lichts eine konstante Signalhöhe aufweist, d.h. sich die Lichtintensität auf dem Lichtempfänger nicht ändert. Die Laufzeit des Lichts entspricht einem Abstand vom Lichtsender 12 zum Reflektor 22 bzw. einem Abstand zum Objekt 26. Eine Laufzeit von 180ns entspricht einer vom Licht zurückgelegten Strecke von 54m, so dass im Falle der Reflexionslichtschranke der Fig. 1 bei einer Laufzeit von 180ns der Abstand d dann 27m beträgt. Eine Laufzeit von 13ns führt auf einen Abstand d' des Objekts 26 vom Lichtsender 12 bzw. Lichtempfänger 14 von 2m. Der Bewertungsfaktor k zeigt einen periodischen Verlauf, der durch eine Periodenlänge des ausgesendeten Lichtsignals sowie des Taktsignals von 800ns bedingt ist. Um eine eindeutige Auswertung der Lichtlaufzeit zu ermöglichen, ist jedoch nur der erste Anstieg des Bewertungsfaktors k, entsprechend einem Viertel der Periodenlänge, von Interesse.

Wie zuvor ausgeführt wurde, ist der Bewertungsfaktor k maximal, wenn keine Phasenverschiebung zwischen dem Ausgangssignal des Lichtempfängers und dem Taktsignal vorliegt. Im dargestellten Beispiel ist das Taktsignal gegenüber dem gesendeten Lichtsignal um 180ns verzögert, so dass der Bewertungsfaktor k in dem Schaubild der Fig. 3 bei einer Laufzeit von 180ns maximal und auf 100% normiert ist. Befindet sich demnach kein Objekt im Strahlengang zwischen Lichtsender 12, Reflektor 22 und Lichtempfänger 14, benötigt das Licht 180ns, um vom Lichtsender 12 zum Lichtempfänger 14 zu gelangen und der Bewertungsfaktor k beträgt in diesem Fall 100%.

Befindet sich dahingegen ein Objekt 26 im Abstand d' von 2m vor dem Lichtsender 12 bzw. dem Lichtempfänger 14, benötigt das vom Lichtsender 12 ausgesendete Lichtsignal lediglich 13ns, um wieder zum Lichtempfänger 14 zu gelangen. In diesem Fall hat der Bewertungsfaktor k aufgrund der dann vorliegenden Phasenverschiebung zwischen dem Ausgangssignal des Lichtempfängers 14 und dem Taktsignal nur noch einen Wert von 16%. In dem in der Fig. 3 dargestellten Beispiel wird vom Lichtsender 12 ein Rechtecksignal mit 50% Pulspausenverhältnis und einer Periode von 800ns gesendet. Das gesendete Lichtsignal eilt dem Taktsignal, das zur Steuerung des Synchrongleichrichters verwendet wird, um 180ns vor. Das Taktsignal ist ebenfalls ein Rechtecksignal und hat die gleiche Frequenz wie das gesendete Lichtsignal.

Der in der Fig. 3 dargestellte Verlauf des Bewertungsfaktors k in Prozent ergibt sich demnach aus der folgenden Gleichung, wobei der Bewertungsfaktor k auf ein Viertel der Periodenlänge des Taktsignals von 800ns normiert wurde, da im Sinne einer eindeutigen Auswertung lediglich der erste Anstieg von k von Interesse ist:

$$k = \frac{\frac{800ns}{4} - 180ns + t}{\frac{800ns}{4}} \cdot 100\%$$

Bei einer Lichtlaufzeit von t = 13ns, entsprechend einem Objekt 26 im Abstand d' = 2m im Strahlengang zwischen Lichtsender 12 und Lichtempfänger 14, ergibt sich daraus ein Bewertungsfaktor k von 16,5% oder etwa 16%.

Um auch bei geringen Abständen d' zwischen Lichtsender bzw. Lichtempfänger einen von null verschiedenen Wert des Bewertungsfaktors k zu erreichen, ist das Taktsignal gegenüber dem gesendeten Lichtsignal lediglich um 180ns verzögert, d.h. 20ns weniger als ein Viertel der Periodenlänge von 800ns. Dadurch ist die in der Fig. 3 dargestellte Kurve des Bewertungsfaktors k um 20ns nach links verschoben, so dass auch bei sehr geringen Laufzeiten ein detektierbares Signal erzeugt wird.

Indem nun der Bewertungsfaktor k mit dem Ausgangssignal des Lichtempfängers 14 multipliziert wird, dessen Signalhöhe g in der Fig. 4 dargestellt ist, erfolgt eine Gewichtung des Gains g anhand der vom Lichtsignal benötigten Laufzeit. Im Ergebnis wird der für eine bestimmte Zeitverschiebung t, entsprechend einem bestimmten Abstand d bzw. d', ermittelte Bewertungsfaktor k mit dem entsprechenden Wert des Gains g für denselben Abstand d bzw. d' multipliziert. Diese Gewichtung erfolgt automatisch in dem Synchrongleichrichter, so dass das am Ausgang des Synchrongleichrichters anliegende Bewertungssignal sowohl von der Zeitverschiebung zwischen dem Ausgangssignal des Lichtempfängers 14 und dem Taktsignal als auch von der Signalhöhe des Ausgangssignals des Lichtempfängers 14 abhängt. Dadurch wird der in bezug auf eine Spiegelunterdrückung ungünstige Verlauf des Gains g der Fig. 4 kompensiert, so dass auch bei großen Abständen d zwischen Lichtsender bzw. Lichtempfänger und Reflektor eine gute Spiegelunterdrückung erreicht werden kann.

Allgemein kann der zeitliche Verlauf des Bewertungsfaktors k mittels der folgenden Formel beschrieben werden:

$$k(t)= \frac{\frac{L}{4} - TL + t}{\frac{L}{4}},$$

wobei L die Periodenlänge des Taktsignals bzw. des gesendeten Lichtsignals, TL die Verzögerung des Taktsignals gegenüber dem gesendeten Lichtsignal und t die Laufzeit des Lichtsignals vom Lichtsender zum Lichtempfänger bezeichnet. Wird, wie ausgeführt, durch die Signalverarbeitung mit dem Synchrongleichrichter der Bewertungsfaktor k mit dem in der Fig. 4 dargestellten Verlauf des Gains g multipliziert, wird der Verlauf des sich dadurch ergebenden Gains g' = g · k annähernd linearisiert und somit im Fernbereich das Signal verstärkt und der Fehler verringert, ohne gleichzeitig das Signal für den Nahbereich zu verstärken.

Die im Beispiel gewählten Werte der Zeitverzögerung des Taktsignals gegenüber dem gesendeten Lichtsignal können für jede Anwendung, beispielsweise unterschiedliche Abstände d zwischen Lichtsender 12 bzw. Lichtempfänger 14 und Reflektor 22 oder einen Messbereich eines Reflexionslichttasters angepasst werden. Ein Zeitverzug durch Verarbeitungszeiten in der Auswerteeinheit muss im Rahmen der Zeitverzögerung TL berücksichtigt werden. Während zur Erleichterung des Verständnisses die Beschreibung anhand von Rechtecksignalen erfolgt ist, können tatsächlich Sinussignale verwendet werden, wodurch sich ein prinzipiell ähnlicher, etwas komplizierterer Verlauf des Bewertungssignals ergibt.

Vorstehend wurde das erfindungsgemäße Messgerät in einer Realisierung als Reflexionslichtschranke beschrieben. Gemäß der Erfindung kann ein multifunktionelles Messgerät realisiert werden, das auf eine gewünschte Messfunktion eingestellt werden kann.

Hierzu werden das Ausgangssignal des Lichtempfängers 14 und der mit dem Synchrongleichrichter bestimmte Bewertungsfaktor, der von der Lichtlaufzeit abhängt, in der Auswerteeinheit 16 zunächst getrennt geführt und können in veränderlicher Art und Weise verarbeitet, bewertet und/oder miteinander verknüpft werden. Ein solches Umschalten der Art und Weise der Auswertung in der Auswerteeinheit 16 kann mittels Schaltern, durch die zwischen unterschiedlichen Auswerteschaltungen umgeschaltet wird, oder mittels Verändern von Soft- oder Firmware in der Auswerteeinheit 16, beispielsweise durch Neueinspielen oder ebenfalls Umschalten, erfolgen. Mit Firmware werden im Unterschied zur Benutzerprogrammierung durch Software die im Kontrollspeicher eines mikroprogrammierten Rechners befindlichen Mikroprogramme bezeichnet.

Im beschriebenen Beispiel einer Reflexionslichtschranke werden der Bewertungsfaktor k und das Ausgangssignal des Lichtempfängers 14 durch die Signalverarbeitung des Synchrongleichrichters miteinander multipliziert. Wird aber beispielsweise die Signalhöhe des Ausgangssignals des Lichtempfängers 14 normiert, bevor es auf die Leitung 28 des Synchrongleichrichters gelegt wird, ergibt sich am Ausgang des Synchrongleichrichters auf der Leitung 44 ein dem Verlauf des Bewertungsfaktor k entsprechender Verlauf des Bewertungssignals.

Soll ein Lichttaster mit Hintergrundausblendung realisiert werden, werden das Ausgangssignal des Lichtempfängers 14 und der Bewertungsfaktor k des Synchrongleichrichters hingegen getrennt verarbeitet und bewertet. So wird das Ausgangssignal des Lichtempfängers 14 zunächst gemittelt, und dann wird geprüft, ob der erhaltene gemittelte Fotostrom größer als ein vorgegebener Schwellwert ist. Gleichzeitig wird geprüft, ob der Bewertungsfaktor kleiner als ein vorgegebener Schwellwert ist. Demgemäß wird ein Objekt nur dann detektiert, wenn es Licht vom Lichtsender auf den Lichtempfänger reflektiert und gleichzeitig eine Lichtlaufzeit zwischen Lichtsender und Lichtempfänger kleiner ist als ein vorgegebener Wert, der einem Objektabstand entspricht, der an der unteren Grenze eines auszublendenden Bereichs liegt. Dieser vorgegebene Wert kann durch Anpassen vor Ort, sogenanntes Teaching, eingestellt werden. Im Falle des Lichttasters mit Hintergrundausblendung kann das Schaltkriterium daher wie folgt eingestellt werden.

(1) Fotostrom $\overline{I_{FD}} > I_{Schwelle} \wedge$ Bewertungsfaktor: $k < k_{teach}$

Ein Lichttaster mit einem sogenanntem Schalt-Window, der lediglich Objekte berücksichtigt, die innerhalb eines vorbestimmten Abstandsfensters vom Messgerät liegen, kann durch Implementierung des folgenden Schaltkriterium realisiert werden:

(2) Fotostrom $\overline{I_{FD}} > I_{Schwelle} \wedge$ Bewertungsfaktor: $k_{1teach} < k < k_{2teach}$

Bei der Realisierung einer Reflexionslichtschranke mit Spiegelunterdrückung aber ohne Polarisationsfilter vor Lichtsender und Lichtempfänger wird dann, wenn sich ein Objekt im Strahlengang zwischen Lichtsender und Lichtreflektor befindet, der vom Lichtempfänger ausgegebene und dann gemittelte Fotostrom kleiner sein als ein vorgegebener Schwellwert, da ein Objekt im allgemeinen weniger Licht reflektiert als der Reflektor. Zur Spiegelunterdrückung wird gleichzeitig festgestellt, ob der Bewertungsfaktor des Synchrongleichrichters ungleich einem vorgegebenen Wert ist, der der Lichtlaufzeit vom Lichtsender über den Reflektor zum Lichtempfänger entspricht. Ein Schaltsignal wird demnach dann ausgegeben, wenn der gemittelte Fotostrom kleiner ist als der vorgegebene Schwellwert oder die Lichtlaufzeit ungleich der Lichtlaufzeit durch die vollständige, nicht unterbrochene Messstrecke ist. Zur Realisierung der Reflexionslichtschranke ohne Polarisationsfilter wird demnach folgendes Schaltkriterium implementiert:

(3) Fotostrom $\overline{I_{FD}} < I_{Schwelle} \vee$ Bewertungsfaktor $k \neq k_{teach}$.

**Patentansprüche**

1. Messgerät mit einem Signalgenerator zum Erzeugen eines Steuersignals, mit einem Lichtsender zum Erzeugen eines in definierter Phasenbeziehung zu dem Steuersignal stehenden Lichtsignals, mit einem Lichtempfänger und mit einer Auswerteeinheit, die eine Lichtlaufzeit zwischen Lichtsender und Lichtempfänger berücksichtigt, **dadurch gekennzeichnet, dass** die Auswerteeinheit (16) einen durch das Steuersignal steuerbaren Synchrongleichrichter zum Verarbeiten eines Ausgangssignals des Lichtempfängers (14) und zum Ausgeben eines von der Lichtlaufzeit abhängigen Bewertungssignals aufweist.

2. Messgerät nach Anspruch 1, **dadurch gekennzeichnet, dass** das Steuersignal zum Steuern des Synchrongleichrichters gegenüber dem gesendeten Lichtsignal um einen vorbestimmten Zeitraum verzögert ist.

3. Messgerät nach Anspruch 2, **dadurch gekennzeichnet, dass** die Verzögerung des Steuersignals gegenüber dem ausgesendeten Lichtsignal auf die Lichtlaufzeit zwischen Lichtsender (12) und Lichtempfänger (14) abgestimmt ist.

4. Messgerät nach einem der vorstehenden Ansprüche, **dadurch gekennzeichnet, dass** der Synchrongleichrichter zum Gewichten des Ausgangsignals des Lichtempfängers (14) anhand der Lichtlaufzeit zwischen Lichtsender (12) und Lichtempfänger (14) vorgesehen ist.

5. Messgerät nach einem der vorstehenden Ansprüche, **dadurch gekennzeichnet, dass** im Strahlengang zwischen Lichtsender (12) und Lichtempfänger (14) ein die Polarisationsrichtung des Lichtsignals beeinflussender Reflektor (22) und vor dem Lichtsender (12) sowie dem Lichtempfänger (14) jeweils ein Polarisationsfilter (18, 24) angeordnet ist, wobei Polarisationsebenen der Polarisationsfilter (18, 24) senkrecht zueinander ausgerichtet sind.

6. Messgerät nach einem der Ansprüche 1 bis 3, **dadurch gekennzeichnet, dass** die Auswerteeinheit (16) Mittel zum getrennten Verarbeiten und Bewerten des durch den Synchrongleichrichter bestimmten Bewertungsfaktors (k) und des Ausgangssignals des Lichtempfängers (14) aufweist.

7. Messgerät nach Anspruch 6, **dadurch gekennzeichnet, dass** mehrere auswählbare Mittel zum getrennten Verarbeiten und Bewerten vorgesehen sind, die jeweils eine unterschiedliche Signalverarbeitung und Signalbewertung ausführen können.

8. Messgerät nach Anspruch 6 oder 7, **dadurch gekennzeichnet, dass** die Mittel zum getrennten Verarbeiten und Bewerten in einem Speicher der Auswerteeinheit (16) gespeicherte Programme aufweisen.

9. Messgerät nach einem der Ansprüche 1 bis 8, **dadurch gekennzeichnet, dass** wenigstens der Signalgenerator, der Lichtsender (12), der Lichtempfänger (14) und die Auswerteeinheit (16) in einem gemeinsamen Gehäuse (10) untergebracht sind.

10. Verfahren zum Auswerten der Lichtlaufzeit eines von einem Lichtsender (12) ausgesendeten und von einem Lichtempfänger (14) empfangenen Lichtsignals, das eine definierte Phasenbeziehung zu einem Steuersignal hat, **gekennzeichnet durch** den Schritt des Erzeugens eines von der Lichtlaufzeit abhängigen Bewertungssignals **durch** Verknüpfen eines Ausgangssignals des Lichtempfängers (14) mit dem Steuersignal.

11. Verfahren nach Anspruch 10, **gekennzeichnet durch** den Schritt des Gewichtens des Ausgangssignals des Lichtempfängers (14) mit dem Bewertungssignal.

Fig. 1

Fig. 2

Fig. 3

Fig. 4